# EUROPEAN PATENT APPLICATION

(11) **EP 4 644 155 A1**
(43) Date of publication of application: **05.11.2025**
(21) Application number: 23912100.7
(22) Date of filing: 26.12.2023
(51) Int. Cl.: B60K 11/04, B60K 8/00

(54) **WORK VEHICLE**

(30) Priority: 28.12.2022 JP 2022212141
(71) Applicant: KUBOTA CORPORATION, Osaka-shi, Osaka 556-8601 (JP)
(72) Inventor: MORITA Atsushi, Sakai-shi, Osaka 590-0908 (JP); IWAMI Kenichi, Sakai-shi, Osaka 590-0908 (JP); SAKANO Tomoyoshi, Sakai-shi, Osaka 590-0908 (JP); TAKAKI Go, Sakai-shi, Osaka 590-0908 (JP); MINAMIDE Yuki, Sakai-shi, Osaka 590-0908 (JP); AMITANI Kodai, Sakai-shi, Osaka 590-0908 (JP); TAKAKI Takahiro, Sakai-shi, Osaka 590-0908 (JP); HAYASHI Yosuke, Sakai-shi, Osaka 590-0908 (JP); OHNISHI Teppei, Sakai-shi, Osaka 590-0908 (JP); KAZAMA Isamu, Sakai-shi, Osaka 590-0908 (JP); MATSUI Kenshiro, Sakai-shi, Osaka 590-0908 (JP); ISHIHARA Kenji, Sakai-shi, Osaka 590-0908 (JP)
(74) Representative: Cabinet Beau de Loménie
(86) International application number: PCT/JP2023/046552
(87) International publication number: WO 2024/143321

(57) **Abstract**

To provide a working vehicle (1) having proper output stability of a fuel cell (8).

A working vehicle (1) including a vehicle body (2), a traveling device (4) to support the vehicle body (2) such that the vehicle body (2) is allowed to travel, a driving motor (7) to drive the traveling device (4), a fuel cell to supply electric power to the driving motor, a first radiator device (21) to cool a refrigerant to be circulated through a cooling passage (H1) of a heat-producing component including the driving motor by heat exchange with outside air, a second radiator device (22) to cool a refrigerant to be circulated through a cooling passage (H2) of the fuel cell by heat exchange with outside air, a housing (11) to cover the fuel cell, the first radiator device, and the second radiator device, a first passage (41) to allow air for heat exchange of the first radiator device guided into the housing to pass by the fuel cell and go out of the housing, and a second passage (42) to allow air for heat exchange of the second radiator device guided into the housing to pass by the fuel cell and out of the housing.

## Description

### Technical Field

The present invention relates to working vehicles each of which is driven by electric power supplied from a fuel cell.

### Background Art

In recent years, in order to implement decarbonization, development of a fuel cell type working vehicle that is driven by electric power supplied from a fuel cell using hydrogen as fuel has been advanced. In general, in this type of working vehicle, the configuration of the entire vehicle is not designed from the origin, but often through a replacement of the engine of an existing engine drive type working vehicle with the fuel cell using the configuration. A tractor (working vehicle) disclosed in PTL 1 includes an electric motor for traveling and a fuel cell that supplies electric power to the electric motor for traveling.

The fuel cell used in this type of working vehicle is necessary to maintain the internal temperature within a predetermined temperature range so as to stably obtain high power generation efficiency. Moreover, this type of working vehicle is also equipped with heat generating components that are required to be cooled, such as an electric motor for traveling and an electrical component, in addition to the fuel cell. Thus, in this type of working vehicle, a plurality of radiators are mounted inside the vehicle body so that the temperatures of the fuel cell and the other heat generating components can be individually adjusted.

### Citation List

### Patent Literature

PTL 1: Japanese Unexamined Patent Application Publication No. 2002-225577

### Summary of Invention

### Technical Problem

However, when the plurality of radiators are mounted inside the vehicle body as in the above-described working vehicle, cool air guided from the outside of the vehicle body to the arrangement portion of each radiator and warm air after passing through each radiator interfere with each other, and the heat exchange efficiency of each radiator may be lowered. As a result, the internal temperature of the fuel cell is not appropriately adjusted, and there is a possibility that the power generation efficiency is lowered.

The present invention has been made in view of the above-described problem, and an object of the present invention is to provide working vehicles each having excellent stability of power generation efficiency of a fuel cell.

### Solution to Problem

The present invention includes the following technical solution(s) to attain the above-described object.

A working vehicle according to an example embodiment of the present invention includes a vehicle body, a traveling device to support the vehicle body such that the vehicle body is allowed to travel, a driving motor to drive the traveling device, a fuel cell to supply electric power to the driving motor, a first radiator device to cool a refrigerant to be circulated through a cooling passage of a heat-producing component including the driving motor by heat exchange with outside air, a second radiator device to cool a refrigerant to be circulated through a cooling passage of the fuel cell by heat exchange with outside air, a housing to cover the fuel cell, the first radiator device, and the second radiator device, a first passage to allow air for heat exchange of the first radiator device guided into the housing to pass by the fuel cell and go out of the housing, and a second passage to allow air for heat exchange of the second radiator device guided into the housing to pass by the fuel cell and out of the housing.

The first passage may include a first cool air passage to allow cool air outside the housing to pass by the fuel cell and guide the cool air to the first radiator device. The second passage may include a second cool air passage to allow cool air outside the housing to pass by the fuel cell and guide the cool air to the second radiator device.

The first passage may include a first warm air passage to guide warm air having been subjected to the heat exchange by the first radiator device outward from the housing. The second passage may include a second warm air passage to guide warm air having been subjected to the heat exchange by the second radiator device outward from the housing.

The housing may include a first air supply hole to guide the cool air into the first cool air passage, a second air supply hole to guide the cool air into the second cool air passage, a first air discharge hole to guide the warm air out of the first warm air passage, and a second air discharge hole to guide the warm air out of the second warm air passage. The first air supply hole and the second air supply hole may be provided at an intermediate portion in a front-rear direction of the housing. The first air discharge hole may be provided at a front portion of the housing. The second air discharge hole may be provided at a rear portion of the housing.

The working vehicle may further include a cabin mounted on the vehicle body. The second air discharge hole may be provided forward of a lower portion of the cabin.

The first passage may include a first warm air passage to allow warm air having been subjected to the heat exchange by the first radiator device to pass by the fuel cell and guide the warm air outward from the housing. The second passage may include a second warm air passage to allow warm air having been subjected to the heat exchange by the second radiator device to pass by the fuel cell and guide the warm air outward from the housing.

The first passage may include a first cool air passage to guide cool air outside the housing to the first radiator device before the cool air passes by the fuel cell. The second passage may include a second cool air passage to guide cool air outside the housing to the second radiator device before the cool air passes by the fuel cell.

The housing may include a first air supply hole to guide the cool air into the first cool air passage, a second air supply hole to guide the cool air into the second cool air passage, a first air discharge hole to guide the warm air out of the first warm air passage, and a second air discharge hole to guide the warm air out of the second warm air passage. The first air supply hole may be provided at a front portion of the housing. The second air supply hole may be provided at a rear portion of the housing. The first air discharge hole and the second air discharge hole may be provided at an intermediate portion in a front-rear direction of the housing.

The working vehicle may further include a cabin mounted on the vehicle body. The second air supply hole may be provided forward of a lower portion of the cabin.

The first radiator device may be provided adjacent to and forward of the fuel cell inside the housing. The second radiator device may be provided adjacent to and rearward of the fuel cell inside the housing.

### Advantageous Effects of Invention

According to the above-described working vehicle, interference of the heat-exchange air between the two radiator devices can be avoided. Thus, the stability of the power generation efficiency of the fuel cell is significantly improved.

### Brief Description of Drawings

[FIG. 1] FIG. 1 is a left side view of a working vehicle of the present invention.
[FIG. 2] FIG. 2 is a top view of the working vehicle of the present invention.
[FIG. 3] FIG. 3 is a block diagram illustrating a basic configuration of the working vehicle of the present invention.
[FIG. 4] FIG. 4 is a schematic configuration diagram of the periphery of a fuel cell of a first embodiment as viewed from a lateral side.
[FIG. 5] FIG. 5 is a schematic configuration diagram of the periphery of the fuel cell of a second embodiment as viewed from above.
[FIG. 6] FIG. 6 is a schematic configuration diagram of the periphery of the fuel cell of a third embodiment as viewed from a lateral side.
[FIG. 7] FIG. 7 is a schematic configuration diagram of the periphery of the fuel cell of a fourth embodiment as viewed from above.

### Description of Embodiments

Embodiments of the present invention will be described with reference to the drawings. A working vehicle 1 of the present embodiment is a tractor and is a type of fuel cell vehicle (FCV) that is driven using electric power generated by a fuel cell. However, the working vehicle 1 according to the present invention is not limited to the tractor. For example, the working vehicle 1 according to the present invention may be an agricultural machine other than the tractor, a construction machine, a utility vehicle, or the like.

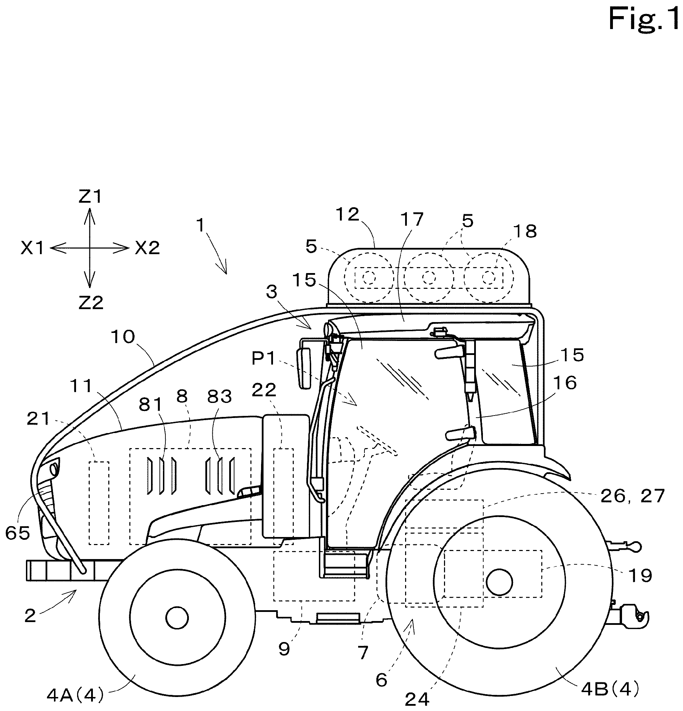

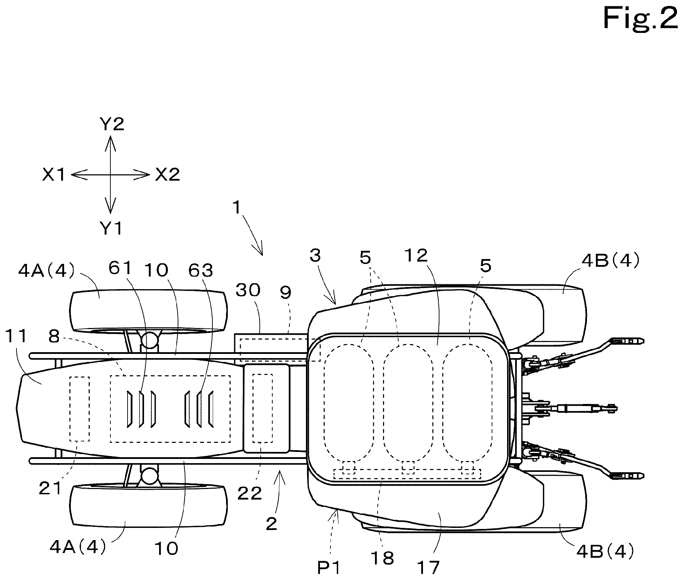

In the following description, a direction in which the working vehicle 1 travels forward/rearward (X1 and X2 directions indicated by arrows in FIGS. 1 and 2) is described as a front-rear direction, a direction horizontally orthogonal to the direction in which the working vehicle 1 travels forward/rearward (a near-far direction in FIG. 1, Y1 and Y2 directions indicated by arrows in FIG. 2) is described as a left-right direction, and a direction vertically orthogonal to the direction in which the working vehicle 1 travels forward/rearward (Z1 and Z2 directions indicated by arrows in FIG. 1, a near-far direction in FIG. 2) is described as an up-down direction.

### <First Embodiment>

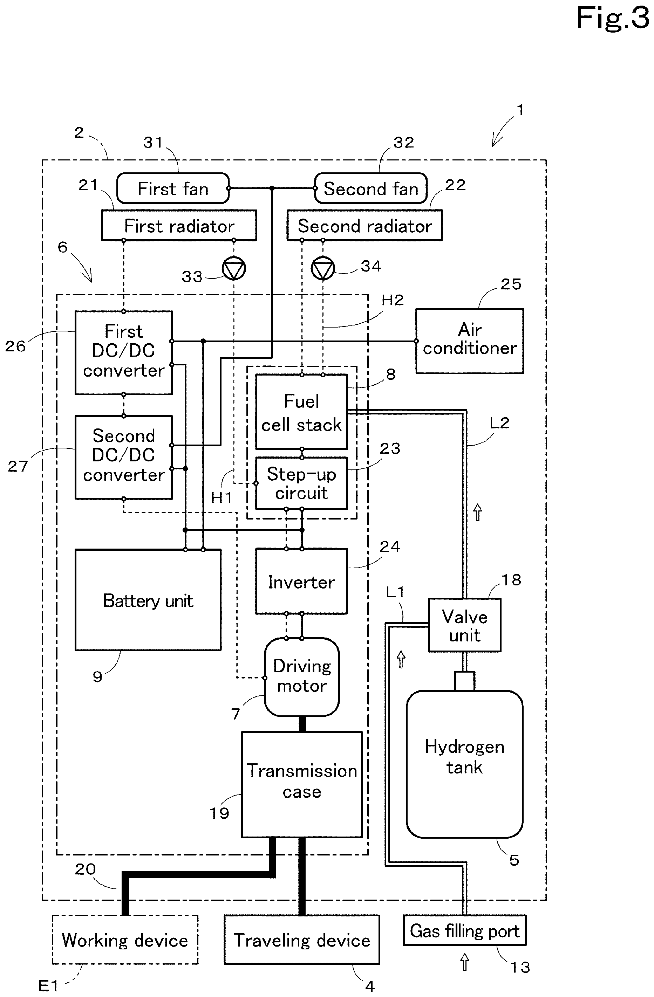

As illustrated in FIGS. 1 and 2, the working vehicle 1 includes a vehicle body 2, a cabin 3 that covers the periphery of an operator's seat P1 provided on the vehicle body 2, a traveling device 4 that supports the vehicle body 2 so as to be travelable, at least one hydrogen tank 5 that stores hydrogen gas, and a driving device 6 that drives the traveling device 4 using the hydrogen gas as an energy source. As illustrated in FIGS. 1 and 3, the driving device 6 includes a driving motor 7 that drives the traveling device 4, a fuel cell stack (fuel cell) 8 that generates electric power by the hydrogen gas and supplies the electric power to the driving motor 7, and a battery unit 9 that stores the electric power supplied from the fuel cell stack 8.

The vehicle body 2 is provided by combining metal frame members and/or the like, and supports the cabin 3, the traveling device 4, and the driving device 6. As illustrated in FIGS. 1 and 2, the vehicle body 2 includes at least one fixed frame 10. The cabin 3 is provided on an upper portion of the vehicle body 2, at a position close to the rear thereof. The fuel cell stack 8 is provided on the upper portion of the vehicle body 2, at a position close to the front thereof, and is housed inside a hood 11. That is, the fuel cell stack 8 is provided at a position located forward of the operator's seat P1, and is covered with a housing (hood 11) on a vehicle front portion. A tank case 12 that houses the hydrogen tank 5 is provided on an upper portion of the fixed frame 10. Although not illustrated, a gas filling port (receptacle) 13 is provided at a rear portion of the vehicle body 2. A gas filling nozzle of a hydrogen gas supplier installed outside the vehicle is connected to the gas filling port 13 when the hydrogen tank 5 is filled with the hydrogen gas.

As illustrated in FIG. 1, the fixed frame 10 is vertically provided on the upper portion of the vehicle body 2. The fixed frame 10 is a pipe body having a long axis and has an arch shape that curves upward of the vehicle body 2 so as to straddle the cabin 3 and the hood 11. Specifically, a front end of the fixed frame 10 is coupled to a front lower position of the hood 11 at the vehicle body 2, and a rear end of the fixed frame 10 is coupled to a rear lower position of the cabin 3 at the vehicle body 2. Alternatively, the fixed frame 10 may have an arch shape that curves upward of the vehicle body 2 so as to straddle the cabin 3 at a position located rearward of the hood 11.

As illustrated in FIG. 2, the at least one fixed frame 10 includes a pair of fixed frames 10 arranged in parallel at both left and right side positions with the hood 11 interposed therebetween. The fixed frames 10 support the tank case 12 from below at a position above the cabin 3. That is, the hydrogen tank 5 is supported by the vehicle body 2 via the two left and right fixed frames 10. The fixed frames 10 have both a function of stably supporting the hydrogen tank 5 and a function of absorbing vibration of the vehicle body 2 during traveling or work to reduce an impact on the hydrogen tank 5.

The tank case 12 is a box body capable of housing a plurality of hydrogen tanks 5, and is fixed (rigidly fixed) to upper edge portions of the fixed frames 10 by fixing brackets, bolts and nuts, welding, or the like. The tank case 12 of the present embodiment is made of a steel material having material properties and a thickness capable of thermally and physically protecting the hydrogen tanks 5 from the outside. The tank case 12 has a box shape that covers the entire hydrogen tanks 5 housed therein, but may have a bucket shape that opens upward, or may have a cover shape that opens downward.

The cabin 3 is a protection mechanism that protects the operator's seat P1, and includes a plurality of panels 15 vertically provided at front, rear, left, and right positions of the operator's seat P1, pillars (protection frames) 16 vertically provided in the periphery of the operator's seat P1 along abutting edges of the adjacent panels 15, and a roof 17 continuously provided and supported on upper portions of the pillars 16. The hood 11 is continuously provided at a position located forward of the cabin 3.

The traveling device 4 includes wheels rotatably supported at left and right side portions of the vehicle body 2, and includes a pair of left and right front wheels 4A and a pair of left and right rear wheels 4B. In the present embodiment, power is transmitted from the driving motor 7 to the front wheels 4A or the rear wheels 4B, or the front wheels 4A and the rear wheels 4B. Alternatively, the front wheels 4A or the rear wheels 4B, or the front wheels 4A and the rear wheels 4B to which the power is transmitted from the driving motor 7 and that serve as driving wheels may be crawlers.

Each hydrogen tank 5 is a substantially cylindrical high-pressure container made of a hard synthetic resin or the like reinforced with carbon fiber or glass fiber, and one or more hydrogen tanks 5 are housed inside the tank case 12 provided at the position above the cabin 3. In the working vehicle 1 of the present embodiment, three hydrogen tanks 5 are housed side by side in the front-rear direction inside the tank case 12. In this way, in the working vehicle 1 of the present embodiment, since the hydrogen tanks 5 are arranged at the position above the cabin 3 (operator's seat P1), there is a high degree of freedom in the arrangement configuration of the driving motor 7, the fuel cell stack 8, and the battery unit 9 with respect to the vehicle body 2. Also, when the design is changed from an existing engine drive type vehicle to a motor drive type vehicle such as the working vehicle 1 of the present embodiment, it is not necessary to significantly change the arrangement configuration of each member.

The number of mounted hydrogen tanks 5 is not limited to three. For example, only one hydrogen tank 5 may be mounted in the working vehicle 1, two hydrogen tanks 5 may be mounted in the working vehicle 1, or four or more hydrogen tanks 5 may be mounted in the working vehicle 1. Also, the arrangement of the hydrogen tank 5 is not limited to the position above the cabin 3. For example, the hydrogen tank 5 may be provided in a rear portion of the cabin 3, or may be provided in a space below the operator's seat P1.

As illustrated in FIG. 3, the hydrogen tank 5 is coupled to a gas lead-in pipe L1 and a gas lead-out pipe L2 via a valve unit 18. The gas lead-in pipe L1 is a gas lead-in pipeline connecting the gas filling port 13 and the valve unit 18 to each other, and guides the hydrogen gas, which is led from the outside of the vehicle into the gas filling port 13, to the hydrogen tank 5. The gas lead-out pipe L2 is a gas lead-out pipeline connecting the fuel cell stack 8 and the valve unit 18 to each other, and guides the hydrogen gas stored in the hydrogen tank 5 to the fuel cell stack 8. In this way, the hydrogen tank 5 stores the hydrogen gas led from the outside of the vehicle into the gas filling port 13, and supplies the hydrogen gas to the fuel cell stack 8. The valve unit 18 includes an on-off valve, a pressure reducing valve, and/or the like, adjusts the flow rate of the hydrogen gas stored in the hydrogen tank 5 to a predetermined flow rate, and then leads out the hydrogen gas to the fuel cell stack 8 through the gas lead-out pipe L2.

The driving motor 7 includes a rotor that rotates and a stator including a plurality of coils, and rotationally drives an output shaft at a predetermined torque and a predetermined rotation speed. As illustrated in FIG. 1, the driving motor 7 is arranged at a position located rearward of the fuel cell stack 8 and a position below the operator's seat P1. The output shaft is connected to a transmission case 19.

Alternatively, a plurality of driving motors 7 may be mounted in the working vehicle 1. Specifically, for example, the working vehicle 1 includes a driving motor 7 for the front wheels 4A and a driving motor 7 for the rear wheels 4B, and the powers of these driving motors 7 are output to the front wheels 4A and the rear wheels 4B, respectively. Alternatively, driving motors 7 are independently provided for all four wheels of the front wheels 4A and the rear wheels 4B, and the powers of these driving motors 7 are output to the corresponding front wheels 4A and rear wheels 4B, respectively. In this way, when the working vehicle 1 is provided with the driving motors 7 independently for front, rear, left, and right traveling devices 4, it is not necessary to mount a power transmission device such as the above-described transmission case 19. Thus, the configuration of the driving device 6 can be simplified and made compact.

The transmission case 19 is continuously provided at a rear portion of the driving motor 7. The transmission case 19 is assembled with a transmission, a clutch, a differential gear, and the like therein, decelerates or accelerates the power input from the output shaft, and outputs the power to the traveling device 4 (the front wheels 4A and/or the rear wheels 4B). In the working vehicle 1 of the present embodiment, only one driving motor 7 is provided in the upper portion of the vehicle body 2, and the power of the driving motor 7 is distributed and output to the left and right rear wheels 4B by the transmission case 19.

As illustrated in FIG. 3, the transmission case 19 is configured not only to output the power of the driving motor 7 to the traveling device 4 but also to output a portion of the power to a power take-off shaft (PTO shaft) 20 provided at the rear portion of the vehicle body 2. The PTO shaft 20 is coupled to the transmission case 19, and transmits the power of the driving motor 7 to a working device (implement) E1 such as a cultivator or a baler that is used by being coupled to a rear portion of the working vehicle 1. In this way, the working vehicle 1 of the present embodiment can also actuate the working device E1 using the electric power generated by the fuel cell stack 8.

The fuel cell stack 8 is configured such that a plurality of unit cells, each including two types of electrodes of a positive electrode and a negative electrode, are arranged in parallel in a stacked state inside a substantially rectangular box-shaped cell casing, and collects the electric power generated by each unit cell to generate electric power at a voltage and a current required for driving the driving motor 7.

The fuel cell stack 8 is connected to an inverter 24 via a step-up circuit 23. The step-up circuit 23 steps up the electric power generated by the fuel cell stack 8. The inverter 24 converts direct-current (DC) electric power input from the step-up circuit 23 into three-phase alternating-current (AC) electric power and outputs the three-phase AC electric power to the driving motor 7. That is, the fuel cell stack 8 drives the driving motor 7 by the electric power stepped up by the step-up circuit 23. The working vehicle 1 includes at least one low-power electrical component that is actuated at a lower voltage than the voltage of the driving motor 7, and electric power stepped down by at least one step-down circuit is supplied to the low-power electrical component. The working vehicle 1 of the present embodiment includes the battery unit 9, radiator devices 21 and 22, and an air conditioner 25 as the above-described low-power electrical component, and includes a first DC/DC converter 26 and a second DC/DC converter 27 as the above-described step-down circuit.

The first DC/DC converter 26 and the second DC/DC converter 27 are step-down converters that each convert the voltage of the input DC electric power into a further low voltage. The first DC/DC converter 26 supplies the electric power stepped down as described above to the battery unit 9 and the air conditioner 25. The second DC/DC converter 27 supplies the electric power stepped down as described above to the radiator devices 21 and 22. As illustrated in FIG. 1, the invertor 24, the first DC/DC converter 26, and the second DC/DC converter 27 are arranged at positions below the operator's seat P1 in the upper portion of the vehicle body 2.

The battery unit 9 is a rechargeable type secondary battery such as a lithium-ion battery or a lead-acid battery, and temporarily stores the electric power generated by the fuel cell stack 8 and outputs the stored electric power to the inverter 24 and/or the like as appropriate. As illustrated in FIG. 2, the battery unit 9 is housed inside a casing 30 provided between the front wheel 4A and the rear wheel 4B, in a right side portion of the vehicle body 2.

As illustrated in FIGS. 1 and 2, the fuel cell stack 8 and the radiator devices 21 and 22 are housed inside the hood 11. The radiator devices 21 and 22 are provided at positions located forward and rearward of the fuel cell stack 8 on the upper portion of the vehicle body 2. The radiator devices 21 and 22 include a first radiator device 21 arranged at the position located forward of the fuel cell stack 8, and a second radiator device 22 arranged at the position located rearward of the fuel cell stack 8.

As illustrated in FIG. 3, the first radiator device 21 and the second radiator device 22 are included in a cooling system that cools electrical components such as the fuel cell stack 8, the driving motor 7, the step-up circuit 23, the inverter 24, and the DC/DC converters 26 and 27 with a coolant (refrigerant).

The first radiator device 21 cools a coolant supplied through a first cooling passage H1 by heat exchange with outside air. The second radiator device 22 cools a coolant supplied through a second cooling passage H2 by heat exchange with outside air. The first radiator device 21 and the second radiator device 22 respectively have radiator fans 31 and 32 (a first fan 31 and a second fan 32), and the radiator fans 31 and 32 are rotationally driven to cause air to flow through the first radiator device 21 and the second radiator device 22, respectively, to promote the heat exchange with the above-described coolant.

The first radiator device 21 is connected to electrical components (heat generating components) that are required to be cooled, such as the driving motor 7, the step-up circuit 23, the inverter 24, and the DC/DC converters 26 and 27 via the first cooling passage H1. The second radiator device 22 is connected to the fuel cell stack 8 via the second cooling passage H2.

The first cooling passage H1 includes a first circulating pump 33, and the first circulating pump 33 circulates the coolant between the first radiator device 21 and the above-described electrical components including the driving motor 7. The second cooling passage H2 includes a second circulating pump 34, and the second circulating pump 34 circulates the coolant between the second radiator device 22 and the fuel cell stack 8. In this way, the second radiator device 22 is connected to the cooling passage H2 of the fuel cell stack 8, and cools the coolant circulated between the second radiator device 22 and the fuel cell stack 8 by heat exchange, to adjust the internal electrodes of the fuel cell stack 8 to a predetermined temperature. Accordingly, the fuel cell stack 8 can maintain high power generation efficiency.

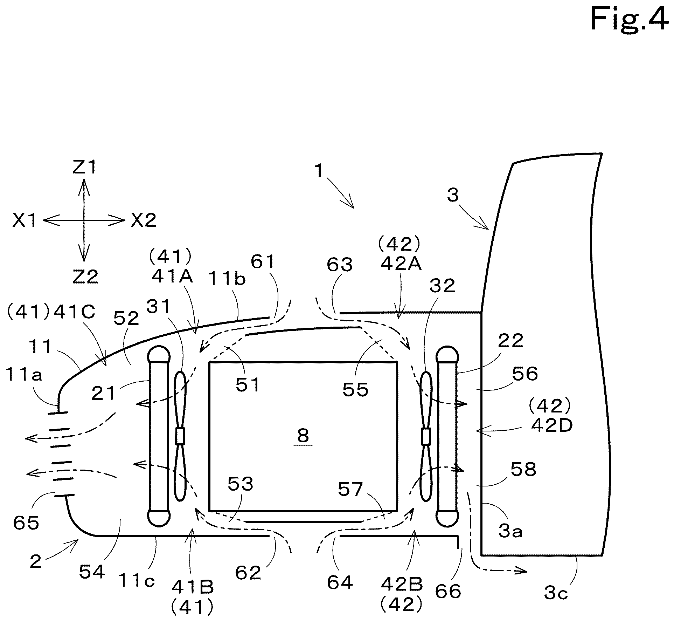

As illustrated in FIG. 4, in the present embodiment, the radiator fans 31 and 32 (the first fan 31 and the second fan 32) are arranged between the radiator devices 21 and 22 and the fuel cell stack 8. That is, the first fan 31 is arranged at a rear surface portion of the first radiator device 21, and rotationally driven to cause heat-exchange air to flow through the first radiator device 21 from the rear toward the front. The second fan 32 is arranged at a front surface portion of the second radiator device 22, and rotationally driven to cause heat-exchange air to flow through the second radiator device 22 from the front toward the rear.

Inside the hood 11, a first air flow passage (first passage) 41 that causes air, which flows to the first radiator device 21 by the first fan 31, to pass by the fuel cell stack 8 and to be led out of the hood 11, and a second air flow passage (second passage) 42 that causes air, which flows to the second radiator device 22 by the second fan 32, to pass by the fuel cell stack 8 and to be led out of the hood 11 are provided.

In the present embodiment, the first air flow passage 41 includes an upper first passage 41A extending from an upper portion toward a front portion of the hood 11, and a lower first passage 41B extending from a lower portion toward the front portion of the hood 11. The second air flow passage 42 includes an upper second passage 42A extending from the upper portion toward a rear portion of the hood 11, and a lower second passage 42B extending from the lower portion toward the rear portion of the hood 11.

The upper first passage 41A includes a first cool air passage 51 that causes cool air outside the hood 11 to pass by the fuel cell stack 8 and guides the cool air to the first radiator device 21, and a first warm air passage 52 that guides warm air after the heat exchange by the first radiator device 21 outward of the hood 11. The lower first passage 41B includes a first cool air passage 53 that causes cool air outside the hood 11 to pass by the fuel cell stack 8 and guides the cool air to the first radiator device 21, and a first warm air passage 54 that guides warm air after the heat exchange by the first radiator device 21 outward of the hood 11. In the present embodiment, the first warm air passage 52 of the upper first passage 41A and the first warm air passage 54 of the lower first passage 41B are joined in a space defined between the first radiator device 21 and a front plate portion 11a of the hood 11. That is, the first warm air passages 52 and 54 are defined by a common passage.

The upper second passage 42A includes a second cool air passage 55 that causes cool air outside the hood 11 to pass by the fuel cell stack 8 and guides the cool air to the second radiator device 22, and a second warm air passage 56 that guides warm air after the heat exchange by the second radiator device 22 outward of the hood 11. The lower second passage 42B includes a second cool air passage 57 that causes cool air outside the hood 11 to pass by the fuel cell stack 8 and guides the cool air to the second radiator device 22, and a second warm air passage 58 that guides warm air after the heat exchange by the second radiator device 22 outward of the hood 11. In the present embodiment, the second warm air passage 56 of the upper second passage 42A and the second warm air passage 58 of the lower second passage 42B are joined in a space defined between the second radiator device 22 and a front partition wall 3a of the cabin 3. That is, the second warm air passages 56 and 58 are defined by a common passage.

The hood 11 includes an upper first air supply hole (first air supply hole) 61 that leads the cool air into the first cool air passage 51 of the upper first passage 41A, a lower first air supply hole (first air supply hole) 62 that leads the cool air into the first cool air passage 53 of the lower first passage 41B, an upper second air supply hole (second air supply hole) 63 that leads the cool air into the second cool air passage 55 of the upper second passage 42A, a lower second air supply hole (second air supply hole) 64 that leads the cool air into the second cool air passage 57 of the lower second passage 42B, a first air discharge hole 65 that leads the warm air out of each of the first warm air passages 52 and 54 of the upper first passage 41A and the lower first passage 41B, and a second air discharge hole 66 that leads the warm air out of each of the second warm air passages 56 and 58 of the upper second passage 42A and the lower second passage 42B.

Both the upper first air supply hole 61 and the upper second air supply hole 63 are provided in an intermediate portion in the front-rear direction of an upper plate portion 11b of the hood 11. Both the lower first air supply hole 62 and the lower second air supply hole 64 are provided in an intermediate portion in the front-rear direction of a lower plate portion 11c of the hood 11. The first air discharge hole 65 is provided in the front plate portion 11a of the hood 11. The second air discharge hole 66 is provided in a rear portion of the lower plate portion 11c of the hood 11, that is, forward of a lower portion of the cabin 3.

Accordingly, when the first fan 31 is driven, the cool air outside the vehicle body is led from the upper first air supply hole 61 and the lower first air supply hole 62 of the hood 11 into the first cool air passage 51 of the upper first passage 41A and the first cool air passage 53 of the lower first passage 41B, respectively. Further, the cool air led into the first cool air passage 51 of the upper first passage 41A and the first cool air passage 53 of the lower first passage 41B passes by the surface of a front portion of the fuel cell stack 8, is guided to the first radiator device 21, and exchanges heat with the coolant. Also, the warm air after the heat exchange in the first radiator device 21 is guided to the first air discharge hole 65 through the first warm air passages 52 and 54 of the upper first passage 41A and the lower first passage 41B, and is discharged outward of the vehicle body.

In contrast, when the second fan 32 is driven, the cool air outside the vehicle body is led from the upper second air supply hole 63 and the lower second air supply hole 64 of the hood 11 into the second cool air passage 55 of the upper second passage 42A and the second cool air passage 57 of the lower second passage 42B, respectively. Further, the cool air led into the second cool air passages 55 and 57 passes by the surface of a rear portion of the fuel cell stack 8, is guided to the second radiator device 22, and exchanges heat with the coolant. Also, the warm air after the heat exchange in the second radiator device 22 is guided to the second air discharge hole 66 through the second warm air passages 56 and 58 of the upper second passage 42A and the lower second passage 42B, and is discharged outward of the vehicle body.

### <Second Embodiment>

The working vehicle 1 of the above-described first embodiment is provided with the first air supply holes 61 and 62 and the second air supply holes 63 and 64 in the upper portion and the lower portion of the hood 11 to lead the outside air into the first air flow passage 41 and the second air flow passage 42. However, the working vehicle 1 may be provided with first air supply holes 81 and 82 and second air supply holes 83 and 84 in left and right side portions of the hood 11 to lead outside air into the first air flow passage 41 and the second air flow passage 42, instead of the upper portion and the lower portion of the hood 11 or in addition to the upper portion and the lower portion of the hood 11.

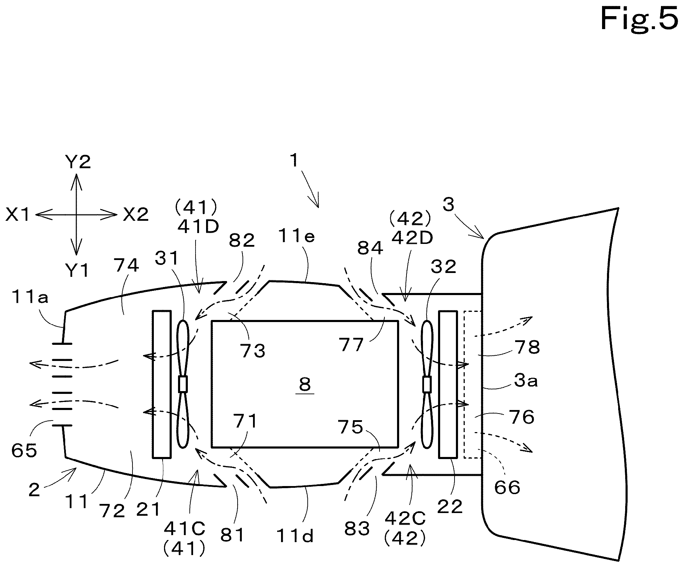

Specifically, as illustrated in FIG. 5, in the present embodiment, a first air flow passage 41 includes a left first passage 41C extending from the left side portion toward the front portion of the hood 11, and a right first passage 41D extending from the right side portion toward the front portion of the hood 11. A second air flow passage 42 includes a left second passage 42C extending from the left side portion toward the rear portion of the hood 11, and a right second passage 42D extending from the right side portion toward the rear portion of the hood 11.

The left first passage 41C includes a first cool air passage 71 that causes cool air outside the hood 11 to pass by the fuel cell stack 8 and guides the cool air to the first radiator device 21, and a first warm air passage 72 that guides warm air after the heat exchange by the first radiator device 21 outward of the hood 11. The right first passage 41D includes a first cool air passage 73 that causes cool air outside the hood 11 to pass by the fuel cell stack 8 and guides the cool air to the first radiator device 21, and a first warm air passage 74 that guides warm air after the heat exchange by the first radiator device 21 outward of the hood 11. In the present embodiment, the first warm air passage 72 of the left first passage 41C and the first warm air passage 74 of the right first passage 41D are joined in the space defined between the first radiator device 21 and the front plate portion 11a of the hood 11. That is, the first warm air passages 72 and 74 are defined by a common passage.

The left second passage 42C includes a second cool air passage 75 that causes cool air outside the hood 11 to pass by the fuel cell stack 8 and guides the cool air to the second radiator device 22, and a second warm air passage 76 that guides warm air after the heat exchange by the second radiator device 22 outward of the hood 11. The right second passage 42D includes a second cool air passage 77 that causes cool air outside the hood 11 to pass by the fuel cell stack 8 and guides the cool air to the second radiator device 22, and a second warm air passage 78 that guides warm air after the heat exchange by the second radiator device 22 outward of the hood 11. In the present embodiment, the second warm air passage 76 of the left second passage 42C and the second warm air passage 78 of the right second passage 42D are joined in the space defined between the second radiator device 22 and the front partition wall 3a of the cabin 3. That is, the second warm air passages 76 and 78 are defined by a common passage.

The hood 11 includes a left first air supply hole (first air supply hole) 81 that leads the cool air into the first cool air passage 71 of the left first passage 41C, a right first air supply hole (first air supply hole) 82 that leads the cool air into the first cool air passage 73 of the right first passage 41D, a left second air supply hole (second air supply hole) 83 that leads the cool air into the second cool air passage 75 of the left second passage 42C, and a right second air supply hole (second air supply hole) 84 that leads the cool air into the second cool air passage 77 of the right second passage 42D. The first air discharge hole 65 provided in the front plate portion 11a of the hood 11 communicates with the first warm air passages 72 and 74 of the left first passage 41C and the right first passage 41D. In contrast, the second air discharge hole 66 provided in the lower plate portion 11c of the hood 11 communicates with the second warm air passages 76 and 78 of the left second passage 42C and the right second passage 42D.

Both the left first air supply hole 81 and the left second air supply hole 83 are provided in an intermediate portion in the front-rear direction of a left plate portion 11d of the hood 11. Both the right first air supply hole 82 and the right second air supply hole 84 are provided in an intermediate portion in the front-rear direction of a right plate portion 11e of the hood 11.

Accordingly, when the first fan 31 is driven, the cool air outside the vehicle body is led from the left first air supply hole 81 and the right first air supply hole 82 of the hood 11 into the first cool air passage 71 of the left first passage 41C and the first cool air passage 73 of the right first passage 41D, respectively. Further, the cool air led into the first cool air passage 71 of the left first passage 41C and the first cool air passage 73 of the right first passage 41D passes by the surface of the front portion of the fuel cell stack 8, is guided to the first radiator device 21, and exchanges heat with the coolant. Also, the warm air after the heat exchange in the first radiator device 21 is guided to the first air discharge hole 65 through the first warm air passages 72 and 74 of the left first passage 41C and the right first passage 41D, and is discharged outward of the vehicle body.

In contrast, when the second fan 32 is driven, the cool air outside the vehicle body is led from the left second air supply hole 83 and the right second air supply hole 84 of the hood 11 into the second cool air passage 75 of the left second passage 42C and the second cool air passage 77 of the right second passage 42D, respectively. Further, the cool air led into the above-described second cool air passages 75 and 77 passes by the surface of the rear portion of the fuel cell stack 8, is guided to the second radiator device 22, and exchanges heat with the coolant. Also, the warm air after the heat exchange in the second radiator device 22 is guided to the second air discharge hole 66 through the second warm air passages 76 and 78 of the left second passage 42C and the right second passage 42D, and is discharged outward of the vehicle body.

### <Third Embodiment>

In the above-described first embodiment, the radiator fans 31 and 32 each are configured to cause air to flow from the side opposite to the fuel cell stack 8 to the side near the fuel cell stack 8 with respect to the radiator device 21 or 22. However, the radiator fans 31 and 32 each may be configured to cause air to flow from the side near the fuel cell stack 8 to the side opposite to the fuel cell stack 8 with respect to the radiator device 21 or 22.

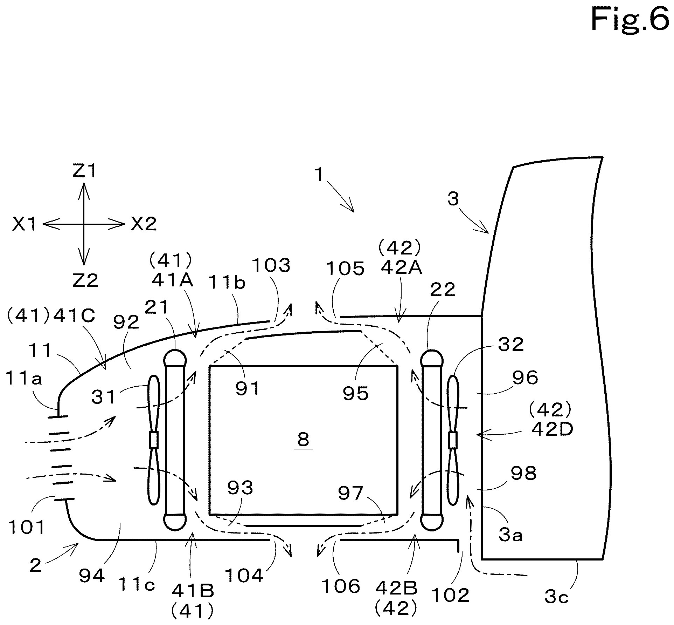

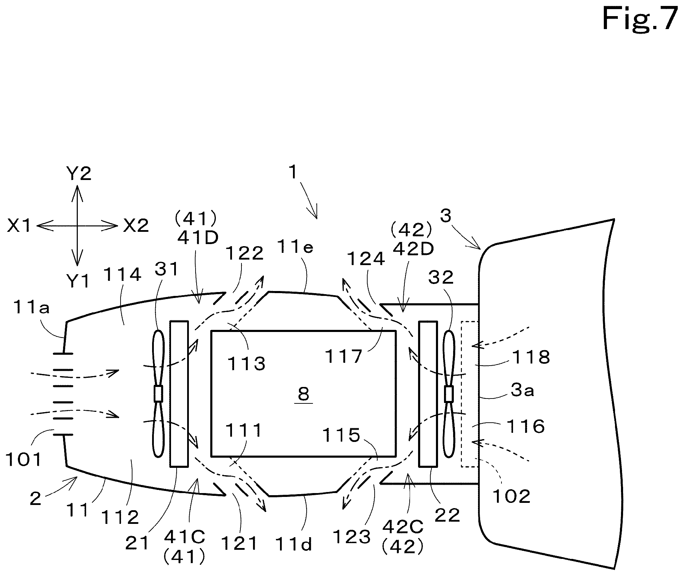

Specifically, as illustrated in FIGS. 6 and 7, the radiator fans 31 and 32 (the first fan 31 and the second fan 32) are arranged at surfaces of the radiator devices 21 and 22 opposite to the fuel cell stack 8. That is, the first fan 31 is arranged at a front surface portion of the first radiator device 21, and rotationally driven to cause heat-exchange air to flow through the first radiator device 21 from the front toward the rear. The second fan 32 is arranged at a rear surface portion of the second radiator device 22, and rotationally driven to cause heat-exchange air to flow through the second radiator device 22 from the rear toward the front.

In the working vehicle 1 illustrated in FIG. 6, a first air flow passage 41 includes an upper first passage 41A extending from the upper portion toward the front portion of the hood 11, and a lower first passage 41B extending from the lower portion toward the front portion of the hood 11. A second air flow passage 42 includes an upper second passage 42A extending from the upper portion toward the rear portion of the hood 11, and a lower second passage 42B extending from the lower portion toward the rear portion of the hood 11.

The upper first passage 41A includes a first warm air passage 91 that causes warm air after the heat exchange by the first radiator device 21 to pass by the fuel cell stack 8 and guides the warm air outward of the hood 11, and a first cool air passage 92 that guides cool air outside the hood 11 to the first radiator device 21 before causing the cool air to pass by the fuel cell stack 8. The lower first passage 41B includes a first warm air passage 93 that causes warm air after the heat exchange by the first radiator device 21 to pass by the fuel cell stack 8 and guides the warm air outward of the hood 11, and a first cool air passage 94 that guides cool air outside the hood 11 to the first radiator device 21 before causing the cool air to pass by the fuel cell stack 8. In the present embodiment, the first cool air passage 92 of the upper first passage 41A and the first cool air passage 94 of the lower first passage 41B are joined in the space defined between the first radiator device 21 and the front plate portion 11a of the hood 11. That is, the first cool air passages 92 and 94 are defined by a common passage.

The upper second passage 42A includes a second warm air passage 95 that causes warm air after the heat exchange by the second radiator device 22 to pass by the fuel cell stack 8 and guides the warm air outward of the hood 11, and a second cool air passage 96 that guides cool air outside the hood 11 to the second radiator device 22 before causing the cool air to pass by the fuel cell stack 8. The lower second passage 42B includes a second warm air passage 97 that causes warm air after the heat exchange by the second radiator device 22 to pass by the fuel cell stack 8 and guides the warm air outward of the hood 11, and a second cool air passage 98 that guides cool air outside the hood 11 to the second radiator device 22 before causing the cool air to pass by the fuel cell stack 8. In the present embodiment, the second cool air passage 96 of the upper second passage 42A and the second cool air passage 98 of the lower second passage 42B are joined in the space defined between the second radiator device 22 and the front partition wall 3a of the cabin 3. That is, the second cool air passages 96 and 98 are defined by a common passage.

The hood 11 includes a first air supply hole 101 that leads the cool air into the first cool air passages 92 and 94 of the upper first passage 41A and the lower first passage 41B, a second air supply hole 102 that leads the cool air into the second cool air passages 96 and 98 of the upper second passage 42A and the lower second passage 42B, an upper first air discharge hole (first air discharge hole) 103 that leads the warm air out of the first warm air passage 91 of the upper first passage 41A, a lower first air discharge hole (first air discharge hole) 104 that leads the warm air out of the first warm air passage 93 of the lower first passage 41B, an upper second air discharge hole (second air discharge hole) 105 that leads the warm air out of the second warm air passage 95 of the upper second passage 42A, and a lower second air discharge hole (second air discharge hole) 106 that leads the warm air out of the second warm air passage 97 of the lower second passage 42B.

The first air supply hole 101 is provided in the front plate portion 11a of the hood 11. The second air supply hole 102 is provided in the rear portion of the lower plate portion 11c of the hood 11, that is, forward of the lower portion of the cabin 3. Both the upper first air discharge hole 103 and the upper second air discharge hole 105 are provided in the intermediate portion in the front-rear direction of the upper plate portion 11b of the hood 11. Both the lower first air discharge hole 104 and the lower second air discharge hole 106 are provided in the intermediate portion in the front-rear direction of the lower plate portion 11c of the hood 11.

Accordingly, when the first fan 31 is driven, the cool air outside the vehicle body is guided from the first air supply hole 101 of the hood 11 to the first radiator device 21 through the first cool air passage 92 of the upper first passage 41A and the first cool air passage 94 of the lower first passage 41B, and exchanges heat with the coolant. Further, the warm air after the heat exchange in the first radiator device 21 passes by the surface of the front portion of the fuel cell stack 8 and is guided to the first warm air passage 91 of the upper first passage 41A and the first warm air passage 93 of the lower first passage 41B, and is discharged outward of the vehicle body through the upper first air discharge hole 103 and the lower first air discharge hole 104.

In contrast, when the second fan 32 is driven, the cool air outside the vehicle body is guided from the second air supply hole 102 of the hood 11 to the second radiator device 22 through the second cool air passage 96 of the upper second passage 42A and the second cool air passage 98 of the lower second passage 42B, and exchanges heat with the coolant. Further, the warm air after the heat exchange in the second radiator device 22 passes by the surface of the rear portion of the fuel cell stack 8 and is guided to the second warm air passage 95 of the upper second passage 42A and the second warm air passage 97 of the lower second passage 42B, and is discharged outward of the vehicle body through the upper second air discharge hole 105 and the lower second air discharge hole 106.

### <Fourth Embodiment>

In the working vehicle 1 illustrated in FIG. 7, a first air flow passage 41 includes a left first passage 41C extending from the left side portion toward the front portion of the hood 11, and a right first passage 41D extending from the right side portion toward the front portion of the hood 11. A second air flow passage 42 includes a left second passage 42C extending from the left side portion toward the rear portion of the hood 11, and a right second passage 42D extending from the right side portion toward the rear portion of the hood 11.

The left first passage 41C includes a first warm air passage 111 that causes warm air after the heat exchange by the first radiator device 21 to pass by the fuel cell stack 8 and guides the warm air outward of the hood 11, and a first cool air passage 112 that guides cool air outside the hood 11 to the first radiator device 21 before causing the cool air to pass by the fuel cell stack 8. The right first passage 41D includes a first warm air passage 113 that causes warm air after the heat exchange by the first radiator device 21 to pass by the fuel cell stack 8 and guides the warm air outward of the hood 11, and a first cool air passage 114 that guides cool air outside the hood 11 to the first radiator device 21 before causing the cool air to pass by the fuel cell stack 8. In the present embodiment, the first cool air passage 112 of the left first passage 41C and the first cool air passage 114 of the right first passage 41D are joined in the space defined between the first radiator device 21 and the front plate portion 11a of the hood 11. That is, the first cool air passages 112 and 114 are defined by a common passage.

The left second passage 42C includes a second warm air passage 115 that causes warm air after the heat exchange by the second radiator device 22 to pass by the fuel cell stack 8 and guides the warm air outward of the hood 11, and a second cool air passage 116 that guides cool air outside the hood 11 to the second radiator device 22 before causing the cool air to pass by the fuel cell stack 8. The right second passage 42D includes a second warm air passage 117 that causes warm air after the heat exchange by the second radiator device 22 to pass by the fuel cell stack 8 and guides the warm air outward of the hood 11, and a second cool air passage 118 that guides cool air outside the hood 11 to the second radiator device 22 before causing the cool air to pass by the fuel cell stack 8. In the present embodiment, the second cool air passage 116 of the left second passage 42C and the second cool air passage 118 of the right second passage 42D are joined in the space defined between the second radiator device 22 and the front partition wall 3a of the cabin 3. That is, the second cool air passages 116 and 118 are defined by a common passage.

The hood 11 includes a left first air discharge hole (first air discharge hole) 121 that leads the warm air out of the first warm air passage 111 of the left first passage 41C, a right first air discharge hole (first air discharge hole) 122 that leads the warm air out of the first warm air passage 113 of the right first passage 41D, a left second air discharge hole (second air discharge hole) 123 that leads the warm air out of the second warm air passage 115 of the left second passage 42C, and a right second air discharge hole (second air discharge hole) 124 that leads the warm air out of the second warm air passage 117 of the right second passage 42D. The first air supply hole 101 provided in the front plate portion 11a of the hood 11 communicates with the first cool air passages 112 and 114 of the left first passage 41C and the right first passage 41D. In contrast, the second air supply hole 102 provided in the lower plate portion 11c of the hood 11 communicates with the second cool air passages 116 and 118 of the left second passage 42C and the right second passage 42D.

Both the left first air discharge hole 121 and the left second air discharge hole 123 are provided in the intermediate portion in the front-rear direction of the left plate portion 11d of the hood 11. Both the right first air discharge hole 122 and the right second air discharge hole 124 are provided in the intermediate portion in the front-rear direction of the right plate portion 11e of the hood 11.

Accordingly, when the first fan 31 is driven, the cool air outside the vehicle body is guided from the first air supply hole 101 of the hood 11 to the first radiator device 21 through the first cool air passage 112 of the left first passage 41C and the first cool air passage 114 of the right first passage 41D, and exchanges heat with the coolant. Further, the warm air after the heat exchange in the first radiator device 21 passes by the surface of the front portion of the fuel cell stack 8 and is guided to the first warm air passage 111 of the left first passage 41C and the first warm air passage 113 of the right first passage 41D, and is discharged outward of the vehicle body through the left first air discharge hole 121 and the right first air discharge hole 122.

In contrast, when the second fan 32 is driven, the cool air outside the vehicle body is guided from the second air supply hole 102 of the hood 11 to the second radiator device 22 through the second cool air passage 116 of the left second passage 42C and the second cool air passage 118 of the right second passage 42D, and exchanges heat with the coolant. Further, the warm air after the heat exchange in the second radiator device 22 passes by the surface of the rear portion of the fuel cell stack 8 and is guided to the second warm air passage 115 of the left second passage 42C and the second warm air passage 117 of the right second passage 42D, and is discharged outward of the vehicle body through the left second air discharge hole 123 and the right second air discharge hole 124.

The present invention provides working vehicles 1 described in the following items. (Item 1) A working vehicle 1 including a vehicle body 2, a traveling device 4 to support the vehicle body 2 such that the vehicle body 2 is allowed to travel, a driving motor 7 to drive the traveling device 4, a fuel cell 8 to supply electric power to the driving motor 7, a first radiator device 21 to cool a refrigerant to be circulated through a cooling passage H1 of an electrical component including the driving motor 7 by heat exchange with outside air, a second radiator device 22 to cool a refrigerant to be circulated through a cooling passage H2 of the fuel cell 8 by heat exchange with outside air, a housing 11 to cover the fuel cell 8, the first radiator device 21, and the second radiator device 22, a first passage 41 to allow air for heat exchange of the first radiator device 21 guided into the housing 11 to pass by the fuel cell 8 and go out of the housing 11, and a second passage 42 to allow air for heat exchange of the second radiator device 22 guided into the housing 11 to pass by the fuel cell 8 and out of the housing 11.

With the working vehicle 1 according to item 1, since interference between the air for heat exchange caused to flow through the first radiator device 21 and the air for heat exchange caused to flow through the second radiator device 22 can be avoided, heat exchange with a coolant is efficiently performed in each of the first radiator device 21 and the second radiator device 22. Accordingly, the internal temperature of the fuel cell 8 can be appropriately adjusted. Thus, the stability of power generation efficiency is significantly improved.

(Item 2) The working vehicle 1 according to item 1, wherein the first passage 41 includes a first cool air passage 51, 53 to allow cool air outside the housing 11 to pass by the fuel cell 8 and guide the cool air to the first radiator device 21, and the second passage 42 includes a second cool air passage 55, 57 to allow cool air outside the housing 11 to pass by the fuel cell 8 and guide the cool air to the second radiator device 22.

With the working vehicle 1 according to item 2, since the cool air outside the housing 11 can be guided to the first radiator device 21 and the second radiator device 22 through the independent routes, the heat exchange with the coolant is more efficiently performed in each of the first radiator device 21 and the second radiator device 22. Accordingly, the internal temperature of the fuel cell 8 can be more appropriately adjusted. Thus, the stability of the power generation efficiency is further improved.

(Item 3) The working vehicle 1 according to item 2, wherein the first passage 41 includes a first warm air passage 52, 54 to guide warm air having been subjected to the heat exchange by the first radiator device 21 outward from the housing 11, and the second passage 42 includes a second warm air passage 56, 58 to guide warm air having been subjected to the heat exchange by the second radiator device 22 outward from the housing 11.

With the working vehicle 1 according to item 3, since the warm air after the heat exchange by the first radiator device 21 and the warm air after the heat exchange by the second radiator device 22 can be discharged to the outside through the independent routes, the heat exchange with the coolant is more efficiently performed in each of the first radiator device 21 and the second radiator device 22. Accordingly, the internal temperature of the fuel cell 8 can be more appropriately adjusted. Thus, the stability of the power generation efficiency is further improved.

(Item 4) The working vehicle 1 according to item 3, wherein the housing 11 includes a first air supply hole 61, 62 to guide the cool air into the first cool air passage 51, 53, a second air supply hole 63, 64 to guide the cool air into the second cool air passage 55, 57, a first air discharge hole 65 to guide the warm air out of the first warm air passage 52, 54, and a second air discharge hole 66 to guide the warm air out of the second warm air passage 56, 58, the first air supply hole 61, 62 and the second air supply hole 63, 64 are provided at an intermediate portion in a front-rear direction of the housing 11, the first air discharge hole 65 is provided at a front portion of the housing 11, and the second air discharge hole 66 is provided at a rear portion of the housing 11.

With the working vehicle 1 according to item 4, since the cool air outside the housing 11 is guided into the housing 11 from the central position between the front and rear of the housing 11, and is discharged by being divided in the front-rear direction of the housing 11, the interference between the heat-exchange air flowing through the first radiator device 21 and the heat-exchange air flowing through the second radiator device 22 can be more reliably avoided. Accordingly, the stability of the power generation efficiency of the fuel cell 8 can be further improved.

(Item 5) The working vehicle 1 according to item 4, further including a cabin 3 mounted on the vehicle body 2, wherein the second air discharge hole 66 is provided forward of a lower portion of the cabin 3.

With the working vehicle 1 according to item 5, since the warm air after the heat exchange by the second radiator device 22 can be discharged downward from the cabin 3, the interference between the warm air and the heat-exchange air caused to flow through the first radiator device 21 can be more reliably avoided. Accordingly, the stability of the power generation efficiency of the fuel cell 8 can be further improved.

(Item 6) The working vehicle 1 according to any one of items 1 to 5, wherein the first passage 41 includes a first warm air passage 91, 93 to allow warm air having been subjected to the heat exchange by the first radiator device 21 to pass by the fuel cell 8 and guide the warm air outward from the housing 11, and the second passage 42 includes a second warm air passage 95, 97 to allow warm air having been subjected to the heat exchange by the second radiator device 22 to pass by the fuel cell 8 and guide the warm air outward from the housing 11.

With the working vehicle 1 according to item 6, since the interference between the warm air after the heat exchange by the first radiator device 21 and the warm air after the heat exchange by the second radiator device 22 can be avoided, the heat exchange with the coolant is more efficiently performed in each of the first radiator device 21 and the second radiator device 22. Accordingly, the internal temperature of the fuel cell 8 can be more appropriately adjusted. Thus, the stability of the power generation efficiency is further improved.

(Item 7) The working vehicle 1 according to item 6, wherein the first passage 41 includes a first cool air passage 92, 94 to guide cool air outside the housing 11 to the first radiator device 21 before the cool air passes by the fuel cell 8, and the second passage 42 includes a second cool air passage 96, 98 to guide cool air outside the housing 11 to the second radiator device 22 before the cool air passes by the fuel cell 8.

With the working vehicle 1 according to item 7, since the cool air outside the housing 11 can be guided to the first radiator device 21 and the second radiator device 22 through the independent routes, the heat exchange with the coolant is more efficiently performed in each of the first radiator device 21 and the second radiator device 22. Accordingly, the internal temperature of the fuel cell 8 can be more appropriately adjusted. Thus, the stability of the power generation efficiency is further improved.

(Item 8) The working vehicle 1 according to item 7, wherein the housing 11 includes a first air supply hole 101 to guide the cool air into the first cool air passage 92, 94, a second air supply hole 102 to guide the cool air into the second cool air passage 96, 98, a first air discharge hole 103, 104 to guide the warm air out of the first warm air passage 91, 93, and a second air discharge hole 105, 106 to guide the warm air out of the second warm air passage 95, 97, the first air supply hole 101 is provided at a front portion of the housing 11, the second air supply hole 102 is provided at a rear portion of the housing 11, and the first air discharge hole 103, 104 and the second air discharge hole 105, 106 are provided at an intermediate portion in a front-rear direction of the housing 11.

With the working vehicle 1 according to item 8, since the cool air outside the housing 11 can be led into the housing 11 from the positions separated in the front-rear direction of the housing 11 and guided to the first radiator device 21 and the second radiator device 22, the interference between the heat-exchange air caused to flow through the first radiator device 21 and the heat-exchange air caused to flow through the second radiator device 22 can be more reliably avoided. Accordingly, the stability of the power generation efficiency of the fuel cell 8 can be further improved.

(Item 9) The working vehicle 1 according to item 8, further including a cabin 3 mounted on the vehicle body 2, wherein the second air supply hole 102 is provided forward of a lower portion of the cabin 3.

With the working vehicle 1 according to item 9, since the heat-exchange air caused to flow through the second radiator device 22 can be led in from the front side of the lower portion of the cabin 3, the interference between the air and the warm air discharged from the first radiator device 21 can be more reliably avoided. Accordingly, the stability of the power generation efficiency of the fuel cell 8 can be further improved.

(Item 10) The working vehicle 1 according to any one of items 1 to 9, wherein the first radiator device 21 is provided adjacent to and forward of the fuel cell 8 inside the housing 11, and the second radiator device 22 is provided adjacent to and rearward of the fuel cell 8 inside the housing 11.

With the working vehicle 1 according to item 10, since the first radiator device 21 and the second radiator device 22 are arranged at the front and rear positions separated from each other with the fuel cell 8 interposed therebetween, the interference between the heat-exchange air caused to flow through the first radiator device 21 and the heat-exchange air caused to flow through the second radiator device 22 can be more reliably avoided. Accordingly, the stability of the power generation efficiency of the fuel cell 8 can be further improved.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: cabin
- 4: traveling device
- 5: hydrogen tank
- 6: driving device
- 7: driving motor
- 8: fuel cell stack (fuel cell)
- 9: battery unit
- 11: hood (housing)
- 21: first radiator device (radiator device)
- 22: second radiator device (radiator device)
- 31: first fan (radiator fan)
- 32: second fan (radiator fan)
- 41: first air flow passage (first passage)
- 42: second air flow passage (second passage)
- 51, 53: first cool air passage
- 52, 54: first warm air passage
- 55, 57: second cool air passage
- 56, 58: second warm air passage
- H1: first cooling passage (cooling passage)
- H2: second cooling passage (cooling passage)

## Claims

1. A working vehicle comprising:
a vehicle body;
a traveling device to support the vehicle body such that the vehicle body is allowed to travel;
a driving motor to drive the traveling device;
a fuel cell to supply electric power to the driving motor;
a first radiator device to cool a refrigerant to be circulated through a cooling passage of an electrical component including the driving motor by heat exchange with outside air;
a second radiator device to cool a refrigerant to be circulated through a cooling passage of the fuel cell by heat exchange with outside air;
a housing to cover the fuel cell, the first radiator device, and the second radiator device;
a first passage to allow air for heat exchange of the first radiator device guided into the housing to pass by the fuel cell and go out of the housing; and
a second passage to allow air for heat exchange of the second radiator device guided into the housing to pass by the fuel cell and out of the housing.

2. The working vehicle according to claim 1, wherein
the first passage includes a first cool air passage to allow cool air outside the housing to pass by the fuel cell and guide the cool air to the first radiator device; and
the second passage includes a second cool air passage to allow cool air outside the housing to pass by the fuel cell and guide the cool air to the second radiator device.

3. The working vehicle according to claim 2, wherein
the first passage includes a first warm air passage to guide warm air having been subjected to the heat exchange by the first radiator device outward from the housing; and
the second passage includes a second warm air passage to guide warm air having been subjected to the heat exchange by the second radiator device outward from the housing.

4. The working vehicle according to claim 3, wherein
the housing includes:
a first air supply hole to guide the cool air into the first cool air passage;
a second air supply hole to guide the cool air into the second cool air passage;
a first air discharge hole to guide the warm air out of the first warm air passage; and
a second air discharge hole to guide the warm air out of the second warm air passage;
the first air supply hole and the second air supply hole are provided at an intermediate portion in a front-rear direction of the housing;
the first air discharge hole is provided at a front portion of the housing; and
the second air discharge hole is provided at a rear portion of the housing.

5. The working vehicle according to claim 4, further comprising:
a cabin mounted on the vehicle body; wherein
the second air discharge hole is provided forward of a lower portion of the cabin.

6. The working vehicle according to claim 1, wherein
the first passage includes a first warm air passage to allow warm air having been subjected to the heat exchange by the first radiator device to pass by the fuel cell and guide the warm air outward from the housing; and
the second passage includes a second warm air passage to allow warm air having been subjected to the heat exchange by the second radiator device to pass by the fuel cell and guide the warm air outward from the housing.

7. The working vehicle according to claim 6, wherein
the first passage includes a first cool air passage to guide cool air outside the housing to the first radiator device before the cool air passes by the fuel cell; and
the second passage includes a second cool air passage to guide cool air outside the housing to the second radiator device before the cool air passes by the fuel cell.

8. The working vehicle according to claim 7, wherein
the housing includes:
a first air supply hole to guide the cool air into the first cool air passage;
a second air supply hole to guide the cool air into the second cool air passage;
a first air discharge hole to guide the warm air out of the first warm air passage; and
a second air discharge hole to guide the warm air out of the second warm air passage;
the first air supply hole is provided at a front portion of the housing;
the second air supply hole is provided at a rear portion of the housing; and
the first air discharge hole and the second air discharge hole are provided at an intermediate portion in a front-rear direction of the housing.

9. The working vehicle according to claim 8, further comprising:
a cabin mounted on the vehicle body; wherein
the second air supply hole is provided forward of a lower portion of the cabin.

10. The working vehicle according to any one of claims 1 to 9, wherein
the first radiator device is provided adjacent to and forward of the fuel cell inside the housing; and
the second radiator device is provided adjacent to and rearward of the fuel cell inside the housing.
